# FASCICULE DE BREVET EUROPEEN

(11) **EP 1 310 633 B1**
(45) Date de publication et mention de la délivrance du brevet: **06.10.2004**
(21) Numéro de dépôt: 01870235.7
(22) Date de dépôt: 07.11.2001
(51) Int. Cl.: F01D 9/04, F04D 29/54

(54) **Etage redresseur d'un compresseur et turbocompresseur comprenant tel etage redresseur**
Leitschaufelstufe eines Verdichters und Verdichter beinhaltend so eine Leitschaufelstufe
Stator vane of a compressor and turbocompressor including such a stator vane

(43) Date de publication de la demande: 14.05.2003
(73) Titulaire: Techspace Aero S.A., 4041 Herstal (BE)
(72) Inventeur: Benedetto, Dante, 4340 Awans (BE); Lecomte, Jean-Luc, 91000 Evry (FR)
(74) Mandataire: Van Malderen, Joelle

(56) Documents cités:
- EP-A- 0 943 785
- GB-A- 666 911
- GB-A- 2 110 768
- US-A- 2 671 634
- US-A- 5 584 654

## Description

### Objet de l'invention

La présente invention se rapporte aux compresseurs, spécialement aux turbocompresseurs.

Elle concerne plus particulièrement les étages redresseurs équipant les turbocompresseurs.

### Etat de la technique

Les turbocompresseurs sont bien connus en technique et sont utilisés notamment dans les moteurs à double corps, les turbosoufflantes et les turboréacteurs.

Ces turbocompresseurs, qui peuvent être du type à basse pression ou du type à haute pression, sont, pour l'essentiel, constitué de plusieurs étages d'aubes tournantes (ou étages rotoriques) alternant avec des étages d'aubes fixes (ou étages statoriques), également dénommés étages redresseurs. Les étages redresseurs ont pour fonction de repositionner (ou redresser) le vecteur vitesse du fluide sortant de l'étage rotorique précédent, avant de l'envoyer dans l'étage rotorique suivant.

Chaque étage redresseur est essentiellement constitué d'aubes fixes reliant une virole intérieure à une virole extérieure, les deux viroles étant coaxiales et concentriques.

Un problème important dans la conception et la construction des étages redresseurs des turbocompresseurs réside dans la fixation des aubes fixes aux deux viroles intérieure et extérieure. En particulier, il est nécessaire que la fixation soit prévue de manière que les défauts et donc les efforts de fonctionnement soient minimisés. En outre, cette fixation doit pouvoir résister à l'introduction d'un corps étranger dans le turbocompresseur (par exemple un oiseau, dans le cas d'un turboréacteur d'avion) ou même au bris accidentel d'une aube.

Dans les turboréacteurs connus, la fixation des aubes des étages redresseurs à leur(s) virole(s) extérieure(s) est habituellement réalisée par soudure, au moyen de rivets ou encore au moyen d'un assemblage de boulons et d'écrous. Certains de ces moyens de fixation des aubes aux viroles présentent d'une part l'inconvénient majeur de perturber l'écoulement du fluide et de générer une perte de charge non négligeable dans la veine aérodynamique de fluide, et d'autre part de nécessiter des moyens industriels non négligeables, par exemple l'utilisation d'une machine de soudure, la mise en oeuvre d'un contrôle non destructif, etc.

Le brevet américain US-A-5,584,654 décrit un étage redresseur de turbofan comprenant une virole extérieure partagée axialement en deux parties qui peuvent être solidarisées, après montage, de façon conventionnelle, par exemple par boulonnage de brides appartenant aux deux parties. La virole présente, tout autour de son diamètre interne, des paires de rails espacés l'un par rapport à l'autre, présentant une forme en "L" et définissant une rainure dans laquelle une pluralité d'aubes statoriques standard sont disposées espacées les unes des autres et s'étendent radialement vers l'intérieur à partir de la virole extérieure. Les aubes s'engagent dans les rails au niveau de crochets extérieurs correspondants, espacés l'un par rapport à l'autre, et situés au niveau de leur pied. Une paire d'aubes statoriques de verrouillage est disposée à la ligne de séparation de la virole. Celles-ci présentent également un pied extérieur possédant des crochets extérieurs qui s'engagent dans les rails de la virole, une clé anti-rotation étant disposée au niveau d'une rainure de verrouillage située à la ligne de séparation des deux parties axiales de la virole.

### Buts de l'invention

La présente invention vise à remédier aux inconvénients majeurs précités, en fournissant un étage redresseur nouveau pour turbocompresseur, dans lequel la fixation des aubes fixes aux viroles, et spécialement à la virole extérieure, est conçue de manière à éviter toute perturbation dans l'écoulement du fluide et à réduire les pertes de charge dans la veine aérodynamique de fluide.

La présente invention vise en outre à faciliter la mise en oeuvre d'un étage redresseur nouveau.

### Principaux éléments caractéristiques de l'invention

La présente invention concerne un étage redresseur d'un compresseur, comprenant une virole extérieure et une virole intérieure, qui sont concentriques et coaxiales et qui sont reliées l'une à l'autre par des aubes fixes, ledit étage redresseur se caractérisant par le fait qu'au moins la virole extérieure comprend un profilé cintré, dont les deux extrémités sont solidarisées l'une à l'autre selon un plan de coupe par un moyen de fixation, ledit profilé présentant sur sa face interne une gorge annulaire dans laquelle les pieds des aubes fixes sont enfilés ou enchâssés.

Selon l'invention, le profilé présente par ailleurs une élasticité qui permet un déplacement radial et/ou latéral de ses extrémités l'une par rapport à l'autre, lorsque le moyen de fixation susdit est relâché ou retiré. La raison de cette conception particulière de la virole apparaîtra plus loin.

Avantageusement, les deux extrémités du profilé sont assemblées l'une à l'autre par un moyen de fixation constitué par exemple de deux pattes soudées respectivement sur chacune des dites extrémités et que l'on solidarise et désolidarise selon les circonstances à l'aide de vis, de brides ou de moyens similaires.

Selon une forme d'exécution préférée de l'invention, la virole extérieure peut être directement formée par un profilé que l'on a cintré en forme d'anneau lorsque l'on rapproche les deux extrémités selon le plan de coupe.

Le profilé pouvant former la virole extérieure présente par ailleurs une gorge annulaire sur la face interne de la virole. Cette gorge est destinée à recevoir les extrémités constituant le pied des aubes fixes qui y sont ainsi enfilées.

Pour fixer les aubes fixes à la virole extérieure, il suffit dès lors de désolidariser les extrémités susdites du profilé selon le plan de coupe, de les écarter l'une de l'autre radialement et/ou latéralement, d'enchâsser les aubes fixes dans la gorge du profilé, puis de resolidariser les deux extrémités du profilé à l'aide d'un élément de fixation. Cet écartement des deux extrémités est réalisable grâce à l'élasticité propre du profilé.

La fixation des aubes fixes à la virole intérieure de l'étage n'est pas critique pour la réalisation de l'invention. Il peut être réalisé par tout moyen connu approprié, comme c'est le cas actuellement par enrobage silicone ou joints d'étanchéité.

Dans l'étage redresseur selon l'invention, le moyen de fixation amovible destiné à solidariser les deux extrémités du profilé de la virole extérieure n'est pas critique. Toutefois selon une forme de réalisation avantageuse de l'invention, il comprend un assemblage de boulons et d'écrous, traversant des brides ménagées aux deux extrémités du profilé.

Dans une forme de réalisation particulière de l'invention, la gorge annulaire du profilé de la virole extérieure présente une section transversale en forme de queue d'aronde ou similaire qui correspond à la forme en section du pied des aubes fixes qui sont enfilées dans ladite gorge.

Cette forme de réalisation particulière de l'étage redresseur selon l'invention présente, comme avantage, que les aubes fixes peuvent être fixées solidement et avec précision à la virole extérieure de l'étage.

Le fait de prévoir cette forme d'exécution permet de s'affranchir de la présence d'éléments tels que soudures, écrous, vis, brides, etc. pouvant dans certains cas perturber le flux de la veine aérodynamique du fluide

Dans une variante de la forme de réalisation qui vient d'être décrite ci-dessus, les déplacements des pieds d'aubes fixes au sein de la gorge annulaire à l'intérieur du profilé sont empêchés par la présence d'une vis de fixation radiale ou de tout autre élément qui a la même fonction.

L'invention présente de multiples avantages. Elle simplifie notamment la construction des étages redresseurs des turbocompresseurs, facilite leur démontage pour le remplacement d'aubes fixes défectueuses et réduit les pertes de charge dans l'écoulement des fluides.

L'invention concerne également un turbocompresseur comprenant des étages redresseurs conformes à l'invention, dans une alternance d'étages d'aubes mobiles et d'étages redresseurs d'aubes fixes.

Le turbocompresseur selon l'invention peut par exemple être une turbosoufflante ou un turboréacteur, ou être utilisé pour l'entraînement d'alternateurs dans des centrales pour la fabrication d'électricité.

### Brève description des figures

La figure 1 est une vue générale d'un turbocompresseur basse pression classique équipé d'un étage redresseur.

La figure 2 est une vue partielle, en section radiale, d'une forme de réalisation particulière de l'étage redresseur selon l'invention.

La figure 3 est, à plus grande échelle, une section transversale selon le plan II-II de la figure 1.

Les figures 4 et 5 sont des photographies d'une partie de la virole de l'étage redresseur des figures 2 et 3.

Dans ces figures, des mêmes notations de référence désignent des éléments identiques.

### Description d'une forme d'exécution préférée de l'invention

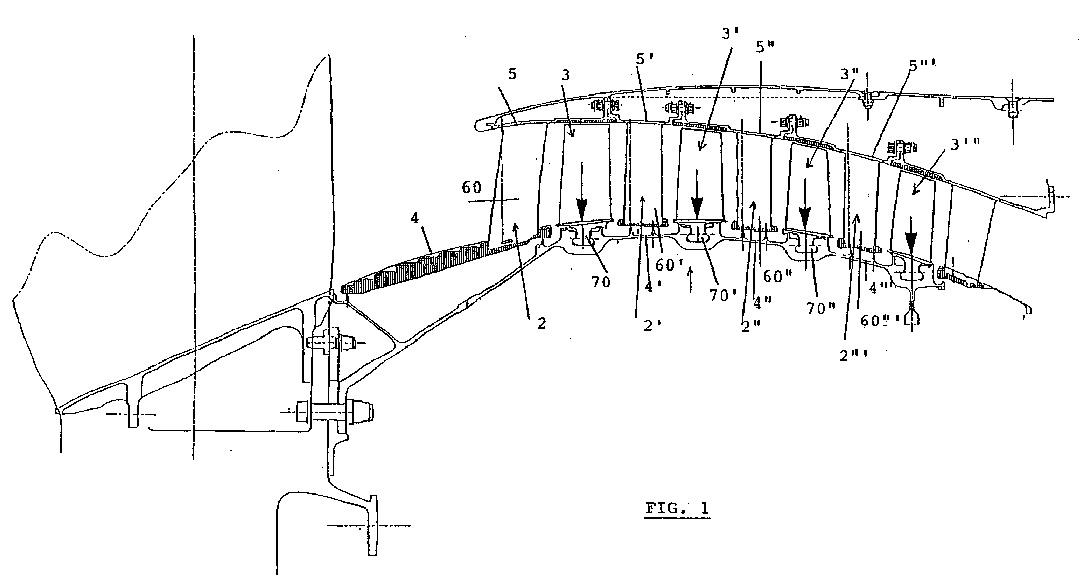

Comme illustré à la figure 1, l'étage de compression d'un turbofan est composé d'une série d'étages rotoriques 3,3',3",... alternant avec une série d'étages statoriques ou redresseurs 2,2',2",...

A la Fig. 1, pour chaque étage rotorique ou statorique, on ne représente en coupe respectivement que la première aube mobile 70, 70', 70" ou la première aube fixe 60, 60', 60".

Tandis que chaque étage rotorique 3,3',3",... comprend une série d'aubes mobiles 70,... , chaque étage redresseur ou statorique 2,2',2",... comprend une série d'aubes fixes respectivement 60,61, ...

Chaque étage redresseur 2,2',2",... comprend en outre une virole intérieure respectivement 4,4' ou 4",... reliée à une virole extérieure respectivement 5,5' ou 5",... par la série d'aubes fixes respectivement 60,61,...; 60', ... ou 60", ... Lesdites viroles intérieures 4,4',4",... et lesdites viroles extérieures 5,5',5",... sont donc propres à chacun des étages redresseurs 2,2',2",...

Lesdites viroles intérieures 4,4',4",... et lesdites viroles extérieures 5,5',5",... se présentent sous la forme de tôles métalliques en forme de couronnes tandis que les séries d'aubes fixes 60,61,... correspondent à des pales métalliques reliant radialement une virole intérieure à une virole extérieure.

Lorsque le turbofan fonctionne, le gaz traverse d'abord le premier étage redresseur 2 du compresseur où son vecteur vitesse est repositionné afin d'être entraîné par le premier étage rotorique d'aubes tournantes 3 avant de rejoindre le deuxième étage redresseur 2' pour être à nouveau repositionné en 3', etc. Le gaz subit ainsi un cycle d'entraînement - repositionnement à l'issue duquel son énergie cinétique diminue progressivement tandis que sa pression croît.

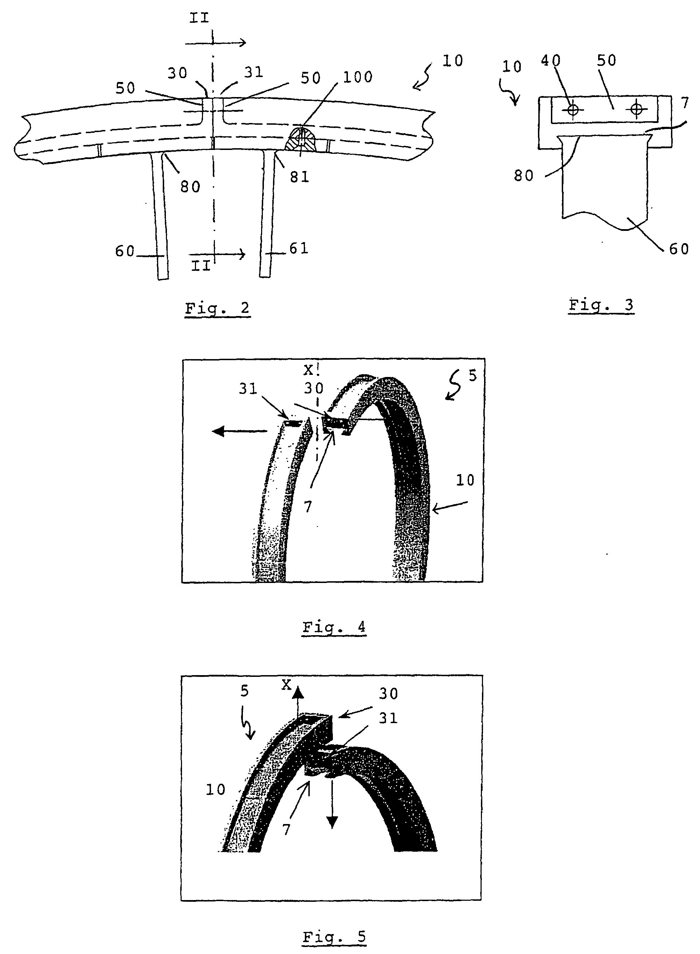

L'invention porte essentiellement sur la virole extérieure 5 et sur la fixation des aubes fixes 60,61, ... à celle-ci. A cet effet, la virole 5 est formée d'un profilé métallique 10, tel qu'illustré aux figures 2 à 5, obtenu par forgeage, que l'on a cintré jusqu'à rapprocher et juxtaposer ses deux extrémités 30,31. Les deux extrémités 30,31 du profilé 10 sont solidarisées, selon un plan de coupe X. Un moyen de fixation des deux extrémités 30, 31 peut par exemple être constitué par un assemblage de boulons et d'écrous 40, traversant deux brides 50 apposées sur le profilé 10.

Le profilé 10 présente, sur sa face intérieure, une gorge longitudinale 7 en queue d'aronde (voir figures 4 et 5). Les pieds 80,81 des aubes fixes 60,61 présentent une forme correspondant à la section de la gorge longitudinale.

Le profilé 10 présente la particularité d'être déformable élastiquement lorsque ses extrémités 30,31 sont désolidarisées. Cette particularité du profilé est mise à profit pour assembler les aubes fixes 60,61, ... sur la virole 1. A cet effet, on déforme le profilé 10 pour écarter latéralement ou radialement ses extrémités 30,31 par exemple de la manière représentée aux figures 4 et 5, on enchâsse ensuite les pieds 80,81, ... des aubes fixes 60,61, ... dans ladite gorge 7. Dès que tous les pieds des aubes sont introduits dans cette gorge annulaire 7, on juxtapose les brides 50 et on les solidarise au moyen d'un assemblage de boulons et d'écrous 40. Eventuellement, on immobilise les pieds desdites aubes au sein même de la gorge annulaire 7, de manière à éviter tout déplacement radial à l'intérieur de celle-ci, au moyen d'au moins une vis de serrage 100.

## Revendications

1. Etage redresseur (2) d'un compresseur, comprenant une virole extérieure (5) et une virole intérieure (4), qui sont concentriques et coaxiales et qui sont reliées l'une à l'autre par des aubes fixes (60, 61, ...), la virole extérieure (5) au moins comprenant un profilé cintré (10) présentant sur sa face interne une gorge annulaire (7) dans laquelle les pieds (80, 81, ...) des aubes fixes (60, 61, ...) sont enfilés, **caractérisé en ce que** les deux extrémités (30, 31) dudit profilé (10) sont solidarisées l'une à l'autre selon un plan de coupe (X) par un moyen de fixation (40, 50) et **en ce que** ledit profilé (10) présente une élasticité permettant un déplacement de ses extrémités l'une par rapport à l'autre selon le plan de coupe, lorsque celles-ci sont désolidarisées.

2. Etage redresseur selon la revendication 1, **caractérisé en ce que** la virole extérieure (5) est le profilé cintré (10).

3. Etage redresseur selon la revendication 1 ou 2, **caractérisé en ce que** le moyen de fixation (40,50) comprend un assemblage de boulons et d'écrous (40), traversant deux brides (50) disposées respectivement sur chacune des extrémités (30,31) du profilé (10).

4. Etage redresseur selon l'une quelconque des revendications précédentes, **caractérisé en ce que** la gorge annulaire (7) du profilé (10) présente une section transversale en queue d'aronde correspondant à la forme du pied (80, 81, ...) des aubes fixes (60, 61, ...).

5. Etage redresseur selon l'une quelconque des revendications précédentes, **caractérisé en ce que** les déplacements des pieds (80, 81, ...) des aubes fixes (60, 61, ...) au sein de la gorge annulaire (7) du profilé (10) sont empêchés par la présence de moyens appropriés tels que des vis (100).

6. Turbocompresseur comprenant une alternance d'étages rotoriques (3, 3',3") d'aubes mobiles (70, ...) et d'étages redresseurs (2, 2',2") d'aubes fixes (60, 61), **caractérisé en ce que** les étages redresseurs sont conformes à l'une quelconque des revendications précédentes.

7. Turbocompresseur selon la revendication 6, **caractérisé en ce qu'**il est une turbosoufflante.

8. Turbocompresseur selon la revendication 6, **caractérisé en ce qu'**il est un turboréacteur.

## Patentansprüche

1. Leitapparat (2) eines Verdichters, der einen Außenring (5) und einen Innenring (4) umfasst, die konzentrisch und koaxial sind und die durch Leitschaufeln (60, 61, ...) miteinander verbunden sind, wobei der Außenring (5) mindestens ein gebogenes Profil (10) umfasst, das auf seiner Innenseite eine Ringnut (7) aufweist, in die die Füße (80, 81, ...) der Leitschaufeln (60, 61, ...) eingeschoben werden, **dadurch gekennzeichnet, dass** beide Enden (30, 31) des besagten Profils (10) in einer Schnittebene (X) durch ein Befestigungsmittel (40, 50) miteinander verbunden werden und dass das besagte Profil (10) eine Elastizität aufweist, die eine Verschiebung der beiden Enden zueinander in der Schnittebene zulässt, wenn diese nicht mehr miteinander verbunden sind.

2. Leitapparat nach Anspruch 1, **dadurch gekennzeichnet, dass** der Außenring (5) das gebogene Profil (10) ist.

3. Leitapparat nach Anspruch 1 oder 2, **dadurch gekennzeichnet, dass** das Befestigungsmittel (40, 50) aus einer Schraubverbindung mit Schrauben und Muttern (40) besteht, die durch zwei Flansche (50) an jedem Ende (30, 31) des Profils (10) gesteckt werden.

4. Leitapparat nach einem der vorstehenden Ansprüche, **dadurch gekennzeichnet, dass** die Ringnut (7) des Profils (10) einen schwalbenschwanzförmigen Querschnitt aufweist, der der Form der Füße (80, 81, ...) der Leitschaufeln (60, 61, ...) entspricht.

5. Leitapparat nach einem der vorstehenden Ansprüche, **dadurch gekennzeichnet, dass** Verschiebungen der Füße (80, 81, ...) der Leitschaufeln (60, 61, ...) in der Ringnut (7) des Profils (10) durch geeignete Mittel wie zum Beispiel Schrauben (100) verhindert werden.

6. Turboverdichter, bestehend aus Rotorstufen (3, 3', 3' ') mit Laufschaufeln (70, ...) und Statorstufen (2, 2' , 2' ') mit Leitschaufeln (60, 61) im Wechsel, **dadurch gekennzeichnet, dass** die Leitapparate einem der vorstehenden Ansprüche entsprechen.

7. Turboverdichter nach Anspruch 6, **dadurch gekennzeichnet, dass** es sich um ein Turbogebläse handelt.

8. Turboverdichter nach Anspruch 6, **dadurch gekennzeichnet, dass** es sich um ein Turbinenluftstrahltriebwerk handelt.

## Claims

1. Guide vane stage (2) of a compressor comprising an outer ferrule (5) and an inner ferrule (4), which are concentric and coaxial and which are connected to each other by fixed vanes (60, 61, ...), the outer ferrule (5) comprising at least one bent metal bar (10) having on its internal surface a circular groove (7) in which the ends (80, 81, ...) of the fixed vanes (60, 61, ...) are inserted, **characterised in that** the two ends (30, 31) of said curved metal bar (10) are fixed to each other along a sectional plane (X) by an attachment means (40, 50) and **in that** said curved metal bar (10) has an elasticity allowing its ends to be pulled apart from each other along the sectional plane when these are not fixed to each other anymore.

2. Guide vane stage according to Claim 1, **characterised in that** the outer ferrule (5) is the bent metal bar (10).

3. Guide vane stage according to Claim 1 or 2, **characterised in that** the attachment means (40, 50) comprises a set of nuts and bolts (40), passing through two collars (50), arranged on each end (30, 31) respectively of the curved metal bar (10).

4. Guide vane stage according to any one of the preceding claims, **characterised in that** the circular groove (7) of the curved metal bar (10) has a transverse section in the form of a dovetail fitting the shapes of the ends (80, 81, ...) of the fixed vanes (60, 61, ...).

5. Guide vane stage according to any one of the preceding claims, **characterised in that** the displacement of the ends (80, 81, ...) of the fixed vanes (60, 61, ...) in the circular groove (7) of the curved metal bar (10) is prevented by the presence of appropriate means such as screws (100).

6. Turbocompressor comprising alternating rotor stages (3, 3', 3") of mobile vanes (70, ...) and guide vane stages (2, 2', 2") of fixed vanes (60, 61), **characterised in that** guide vane stages conform to any one of the preceding claims.

7. Turbocompressor according to Claim 6, **characterised in that** it is a turbofan.

8. Turbocompressor according to Claim 6, **characterised in that** it is a turbojet.
